# FASCICULE DE BREVET EUROPEEN

(11) **EP 0 736 946 B1**
(45) Date de publication et mention de la délivrance du brevet: **08.03.2000**
(21) Numéro de dépôt: 96400682.9
(22) Date de dépôt: 29.03.1996
(51) Int. Cl.: H02H 7/08, H02J 13/00

(54) **Module d'interface entre un bus de terrain et un appareillage électrique de commande et de protection d'un moteur électrique**
Schnittstellenmodul für einen Feldbus und ein elektrisches Steuer- und Schutzgerät eines Elektromotors
Interface module for a field bus and electrical apparatus for controlling and protecting an electrical motor

(30) Priorité: 03.04.1995 FR 9503867
(43) Date de publication de la demande: 09.10.1996
(73) Titulaire: Schneider Electric Industries SA, 92100 Boulogne Billancourt (FR)
(72) Inventeur: Baurand, Gilles, 78360 Montesson la Borde (FR); Ganier,André, 78400 Chatou (FR); Roussel, François, 92500 Rueil-Malmaison (FR)
(74) Mandataire: Saint Martin, René

(56) Documents cités:
- EP-A- 0 391 143
- DE-U- 9 311 725

## Description

La présente invention se rapporte à un module d'interface entre un bus de terrain et un appareillage électrique de commande et protection d'un moteur électrique, ce module comportant un circuit intégré pourvu de broches de données connectées, via des circuits d'interface, à des contacts (ou capteurs TOR) et à des bobines ( ou actionneurs) de l'appareillage électrique.

On utilise, pour réaliser la commande et la protection des moteurs électriques, diverses combinaisons d'appareils électriques encore appelées départs moteurs, notamment des ensembles de démarrage direct, des ensembles de démarrage avec inversion du sens de marche, des ensembles de démarrage étoile-triangle, des démarreurs progressifs.

La fonction de commande de ces appareillages utilise un ou plusieurs contacteurs. Les fonctions de protection du moteur contre les surcharges, les déséquilibres de phases, les surintensités instantanées sont assurées par divers appareils ou modules: relais thermique, disjoncteur moteur, module de protection thermique incorporé à un disjoncteur moteur ou module magnéto-thermique ajouté à un contacteur-disjoncteur.

On a déjà envisagé de commander des disjoncteurs via un bus de communication appartenant à un réseau local industriel. Cette commande n'est pas adaptée à la commande de moteurs électriques.

Il existe un bus de terrain pour capteurs et actionneurs connu sous le nom de bus ASI (initiales de Actuator Sensor Interface) qui permet de raccorder des capteurs et actionneurs binaires, via des modules d'interface ou coupleurs, ce bus étant relié par ailleurs à un cerveau de commande (P.C., automate programmable, etc.). Ce bus est constitué de deux fils et sert à supporter l'alimentation des capteurs et les signaux d'information transitant entre les modules ou coupleurs. Chaque module comprend une électronique dont un circuit intégré et peut piloter 4 actionneurs ou lire les sorties de 4 capteurs standards ou un mixte 2 entrées/2 sorties. L'électronique du module gère les données sur 4 bits pour chaque capteur (entrée) ou chaque actionneur (sortie).

Le document EP-A-391 143 décrit une unité de protection pour moteur connectée à un bus de terrain.

On ne peut utiliser le module interface ci-dessus pour une commande de moteur car le nombre de données à traiter est alors supérieur à 4.

La présente invention a pour but de fournir des modules interfaces capables d'assurer le contrôle de différents appareils de commande et protection d'un moteur électrique, en conservant la configuration des données standard (à 4 bits) définie dans le standard du bus de terrain ASI. Chaque module possède une fonction de sécurité qui arrête la commande en cas d'arrêt du dialogue entre le module et le module maître. En cas de défaut, par exemple une mauvaise masse, ce défaut ne perturbe pas l'environnement, ce défaut étant géré par le réseau sans perturber celui-ci. L'utilisation du module et du réseau associé simplifie le câblage entre un automate de pilotage du réseau et les départs moteurs et permet d'utiliser au maximum les capacités de l'automate.

Le module selon l'invention est caractérisé par le fait que les broches de données du circuit intégré sont reliées, via des circuits logiques, à des entrées ou sorties dont le nombre est supérieur à celui du nombre de broches de données, ces entrés/sorties étant connectées aux bobines ou actionneurs et aux contacts auxiliaires ou capteurs de l'appareillage électrique.

Selon une caractéristique, chaque broche d'entrée/sortie des données déclenche une commande ou détecte un état standardisé quel que soit le type de départ moteur.

Selon une autre caractéristique, une première broche de données correspond à un bit dont l'état définit la marche ou l'arrêt, la seconde broche de données correspond à un bit dont l'état définit l'ouverture ou la fermeture, la troisième broche de données correspond à un bit dont l'état définit un défaut ou un non-défaut, la quatrième broche de données correspond à un bit dont l'état définit l'état de marche.

Selon une autre caractéristique, le module comporte un circuit logique de surveillance détectant l'absence de dialogue entre le module et le bus et agissant sur un circuit de logique contrôlant la ou les sorties de fonctionnement en marche/arrêt.

Selon une autre caractéristique, la première broche et la seconde broche de données du circuit intégré sont bidirectionnelles et sont connectées, via un circuit logique, à deux sorties destinées à être connectés à des bobines ou actionneurs de l'appareillage électrique qui est un départ moteur avec inversion et sont connectées, via un circuit logique, à deux entrées destinées à être connectées à des contacts auxiliaires ou capteurs TOR associés auxdits actionneurs ou bobines.

Selon une caractéristique, le circuit intégré est relié, par une première broche de données et via un circuit logique, à trois sorties destinées à être connectés à des bobines ou actionneurs de l'appareillage électrique qui est un départ moteur avec démarrage étoile-triangle.

Selon une caractéristique, le module comporte un circuit de surveillance du séquencement dont la sortie est reliée à la troisième broche de données du circuit intégré et recevant les signaux des trois entrées connectées aux contacts auxiliaires.

Selon une caractéristique, le module d'interface est caractérisé par le fait qu'il comporte un circuit de logique relié en sortie à une quatrième broche de données du circuit intégré et recevant le signal d'une entrée de contact auxiliaire ou capteur TOR et le signal de sortie d'un organe de commande locale.

L'invention va maintenant être décrite avec plus de détail en se référant à des modes de réalisation donnés à titre d'exemples et représentés par les dessins annexés sur lesquels:
- la figure 1 est un schéma de commande et de protection d'un moteur, du type à démarrage direct, dans lequel est monté un premier mode de réalisation du module interface selon l'invention;
- la figure 2 est un schéma fonctionnel du module de la figure 1;
- la figure 3 un schéma de commande et de protection d'un moteur, du type à inversion du sens de marche, dans lequel est monté un second mode de réalisation du module selon l'invention;
- la figure 4 est un schéma fonctionnel du module de la figure 3;
- la figure 5 est un schéma de commande et de protection d'un moteur, du type à démarrage étoile-triangle, dans lequel est monté un troisième mode de réalisation du module interface selon l'invention;
- la figure 6 est un schéma fonctionnel du module de la figure 5.

Le dispositif selon l'invention sert à commander un moteur électrique triphasé M alimenté par une ligne triphasée L₁, L₂, L₃. Ce dispositif comprend un appareillage électrique de commande et protection moteur C servant à commander le moteur M et à le protéger, cet ensemble étant piloté, via un module ou coupleur d'interface 1, par un réseau de terrain de type ASI (initiales de "Actuator Sensor Interface").

L'appareillage électrique C qui constitue un départ moteur comporte un appareil de protection D du moteur (disjoncteur moteur, etc) et un ou plusieurs contacteurs KM1, KM2, KM3. Ces différents appareils peuvent être séparés ou groupés partiellement ou totalement dans un seul appareil capable d'assurer les fonctions précédentes. L'appareil de protection D comporte un module de protection magnéto-thermique ou est associé à un relais thermique. Il peut être constitué d'appareils séparés.

Un contact ou capteur TOR de sécurité a₆ est associé au moteur M de manière à fournir un signal dit de "sécurité" sur une entrée S du module I. L'appareil de protection D est associé à un contact auxiliaire a₄ et à un contact auxiliaire a₅.

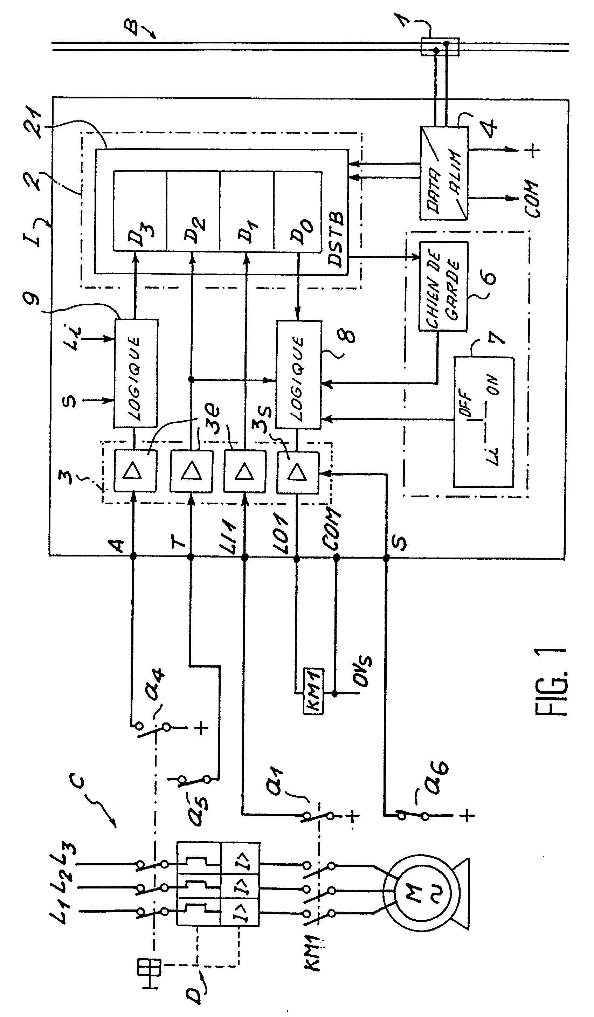

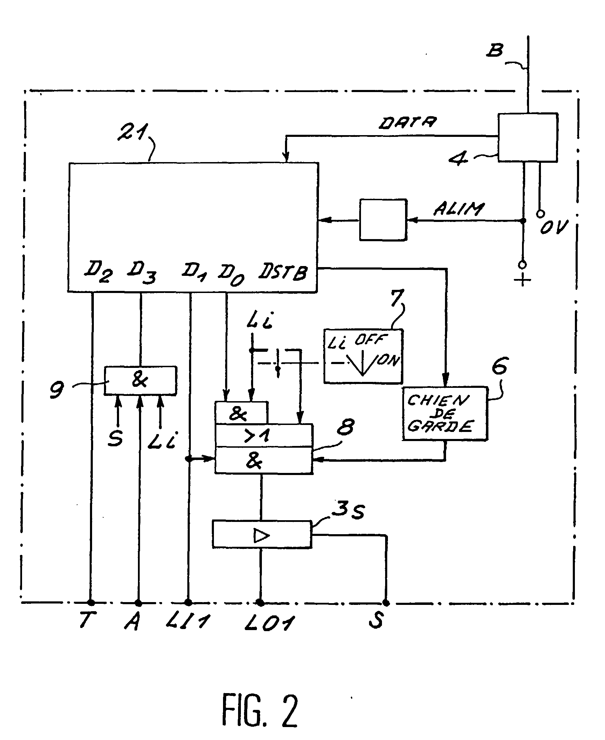

Dans le mode de réalisation des figures 1 et 2 qui est adapté à un démarrage direct, l'appareillage électrique C ne comporte qu'un contacteur KM1.

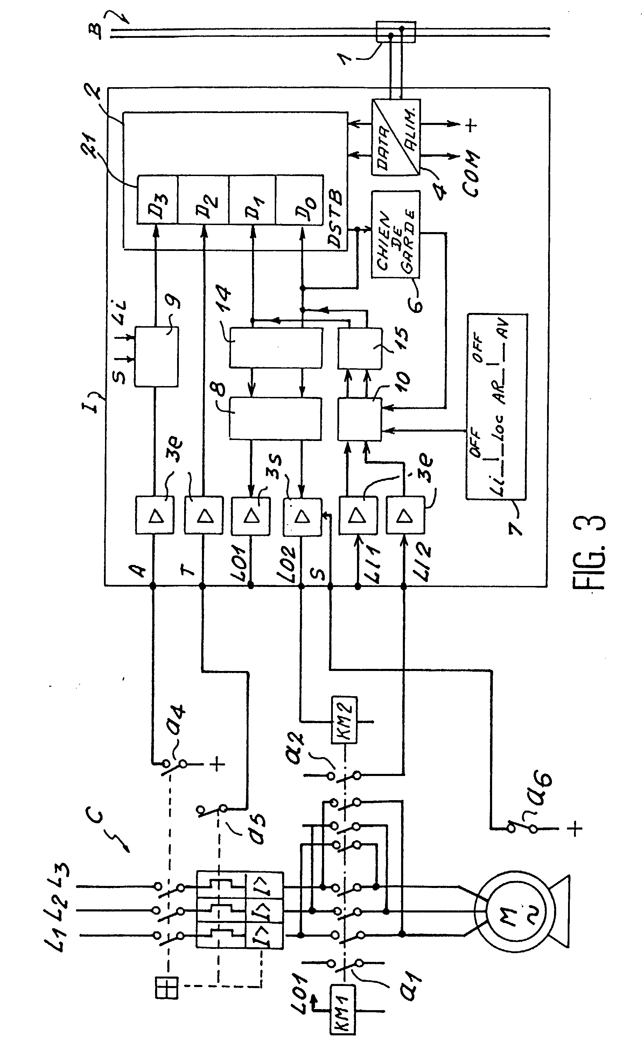

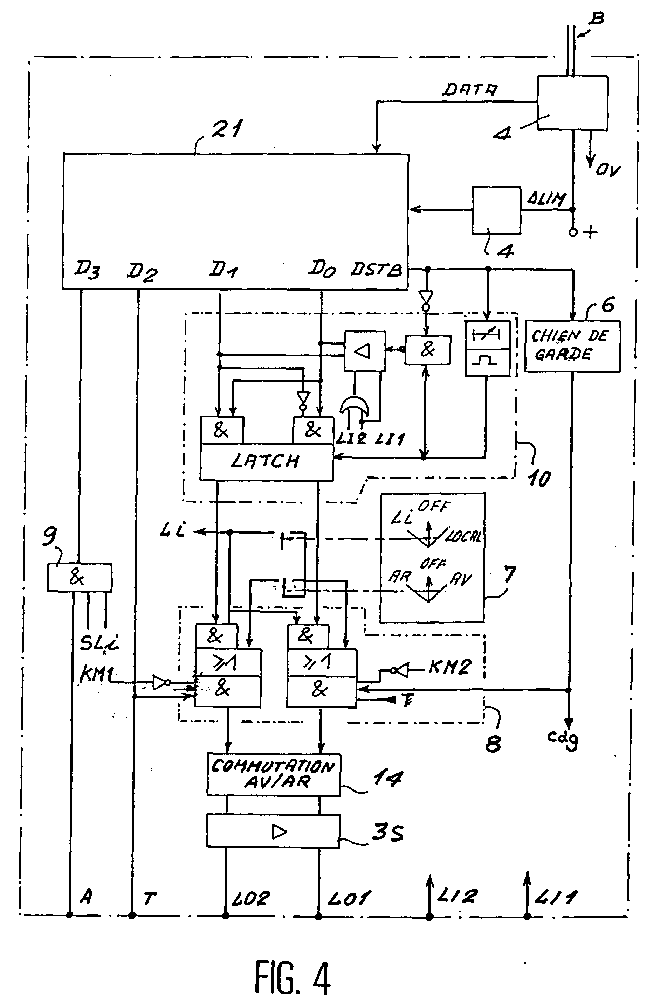

Dans le mode de réalisation des figures 3 et 4 qui est adapté à une commande avec inversion du sens de marche, l'appareillage électrique C comporte deux contacteurs KM1 et KM2. Les contacts auxiliaires a₁ et a₂ sont associés respectivement aux contacteurs KM1 et KM2.

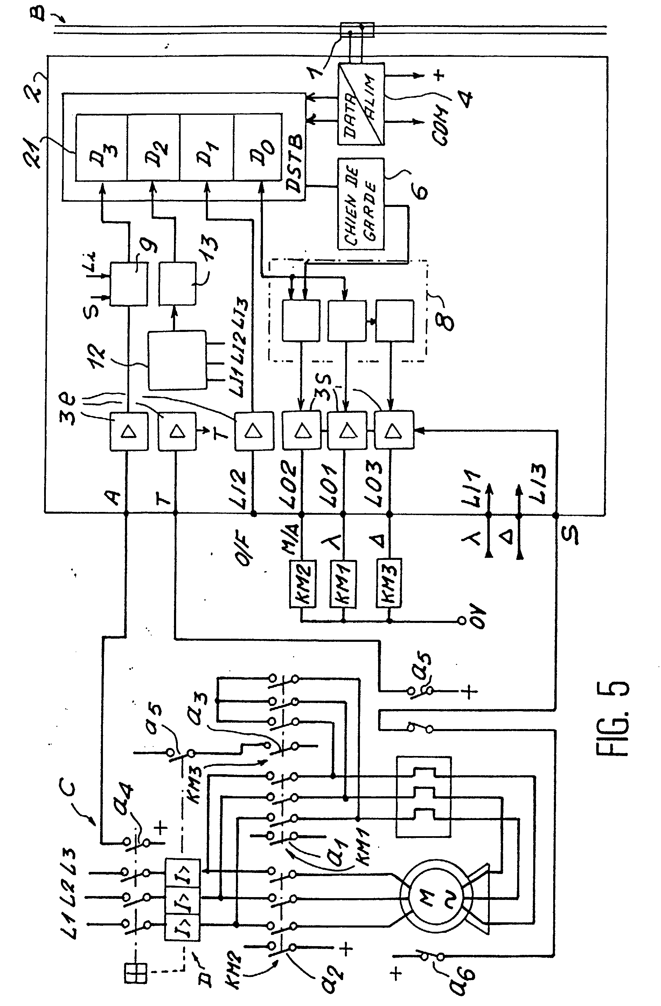

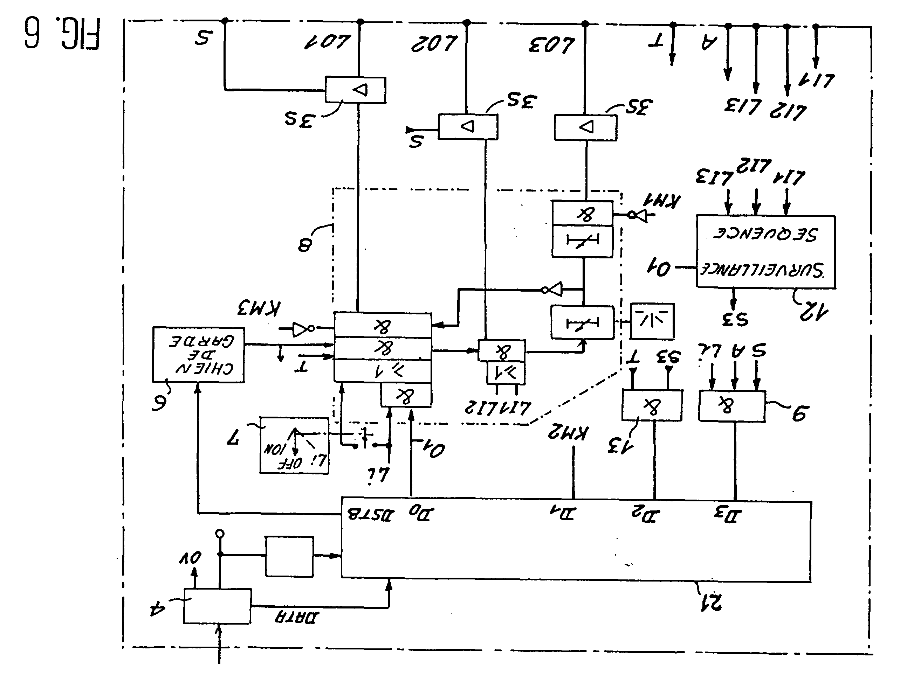

Dans le mode de réalisation des figures 5 et 6 qui est adapté à un démarrage étoile-triangle, l'appareillage électrique C comporte trois contacteurs KM1, KM2, KM3. Les contacts auxiliaires a₁, a₂, a₃ sont associés respectivement aux contacteurs KM1, KM2 et KM3.

Les contacts auxiliaires pourraient être remplacés par des capteurs TOR.

L'appareillage électrique C est piloté au moyen du bus de terrain B de type ASI dont le support physique est constitué de 2 fils véhiculant les signaux d'information et l'alimentation des capteurs et actionneurs. Un cerveau de commande non représenté (P.C., automate programmable, etc.) pilote le réseau dont fait partie le bus B, la connexion entre ce cerveau et le bus étant faite par un module d'interface appelé module "maître".

Les bobines des contacteurs (ou actionneurs) et les contacts (ou capteurs TOR) de l'appareillage électrique C se branchent sur le module ou coupleur d'interface I qui est raccordé par une connexion 1 aux 2 fils du bus B. Ce module d'interface I dit module "esclave" comprend une unité de commande 2 qui décode les demandes du module maître, gère les informations arrivant sur les entrées et génère les commandes sur les sorties et les réponses sur le bus. Cette unité de commande 2 comporte un circuit intégré 21 pourvu de 4 broches de données (entrées ou sorties), de 4 broches pour les paramètres et de 2 sorties de commande. Les broches de données repérées D0, D1, D2, D3 servent à envoyer des signaux binaires sur les bobines ou à recevoir des signaux binaires des contacts auxiliaires.

Les informations de contrôle venant des contacts auxiliaires de l'appareillage C arrivent sur des entrées A, T, LI1, etc.. Les informations de commande destinées aux bobines ou actionneurs de l'appareillage C sont délivrées par des sorties LO1, etc. Ces différentes entrées/sorties qui permettent les connexions avec les capteurs ou actionneurs de l'appareillage C, sont reliées, via des circuits d'interface d'entrée ou de sortie, 3e ou 3s respectivement, aux broches de données D0, D1, D2, D3 du circuit intégré 2. Ces circuits d'interface 3e ou 3s assurent l'adaptation des tensions (24 volts - 5 volts) entre les circuits électroniques internes du module et les entrées ou sorties.

Dans les modes de réalisation représentés sur les dessins, le module I est distinct de l'appareillage C. Les entrées et sorties A, T, etc. sont alors des bornes ou des pièces de connexion permettant de connecter les fils de câblage prévus entre le module I et les contacts auxiliaires ou les bobines.

En variante, le module I peut être intégré à l'appareillage électrique C. Le câblage entre le module et l'appareillage est alors supprimé et il n'y a plus alors qu'à assurer le connexion entre l'ensemble appareillage- module et le bus.

Le module comprend une interface 4 séparant les données de l'alimentation, contrôlant l'impédance du bus et comprenant par ailleurs un dispositif qui reçoit les informations présentes sur le bus B et les traite de manière à les envoyer sur l'unité de contrôle 2 ou qui traite les informations provenant de cette unité de contrôle 2 pour les envoyer sur le bus B.

Une broche DSTB du circuit intégré 21 est reliée à un circuit auxiliaire 6 de surveillance, le chien de garde, qui, lorsque le dialogue est coupé entre le module maître et le module esclave (plus d'échanges), provoque une commande d'arrêt sur le ou les contacteur(s) contrôlant la marche ou l'arrêt. Ce circuit auxiliaire 6 reçoit le signal DSTB du circuit intégré 21 et fournit un signal d'alarme à un circuit logique 8 recevant par ailleurs le signal de commande de la broche D₀ du circuit intégré 21 qui, on le verra plus loin, commande le fonctionnement en marche ou arrêt. Ce circuit logique 8 pilote un circuit d'interface 3s.

Le module I comporte un organe de commande locale 7 monté sur le module et permettant de sélectionner, de manière manuelle, différents modes de fonctionnement. Cet organe est par exemple constitué par un bouton ou une manette de commande .

Des broches de données du circuit intégré 21 ont des fonctions communes quels que soient les modules. Ces broches sont les suivantes:
- la broche D3 reçoit les signaux venant d'une entrée A qui est reliée au contact auxiliaire de signalisation a₄ détectant le bon ordre de marche de l'appareil de protection D ou "disponibilité". Un dispositif additionnel peut éventuellement indiquer sur cette broche D3 si la ligne L1, L2, L3 est sous tension ou hors tension.
- la broche D2 reçoit le signal d'une entrée T qui est reliée au contact auxiliaire de signalisation a₅ associé à l'appareil de protection D et/ou un dispositif de mesure de l'échauffement local (sondes thermiques). Le signal appliqué, en entrée, sur cette broche D2 indique si un courant de défaut a été détecté, de l'appareil de protection D au moteur.
- la broche D1 reçoit un signal de commande tout ou rien indiquant l'ouverture ou la fermeture d'un contacteur.
- la broche D0 fournit un signal tout ou rien commandant la marche ou l'arrêt.

Le tableau ci-dessous résume le configuration des broches ou des bits de données pour les différents types de départs moteurs.

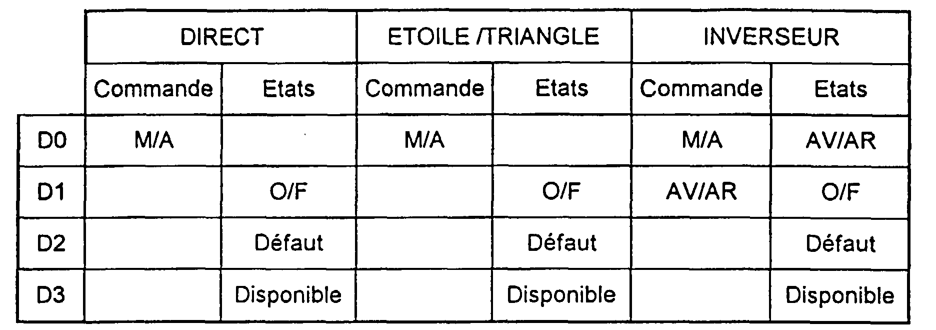

Dans le tableau ci-dessus, M/A signifie marche/arrêt et O/F ouvert/fermé.

Dans le module des figures 1 et 2, le contact auxiliaire a₄ du dispositif de protection est connecté à l'entrée A du module (broche D3). Le contact auxiliaire a₅ de l'appareil de protection D est connecté à l'entrée T du module (broche D2). Le contact auxiliaire a₁ du contacteur KM1 est connecté à l'entrée LI1 du module (broche D1).

La sortie LO1 (broche D0) du module est reliée à une borne de la bobine du contacteur KM1 dont l'autre borne est reliée à la masse (COM). L'organe de commande 7 comporte une position "Arrêt" ou "OFF", une position "Marche" ou "ON" et une position "Li" (qui correspond à la commande à distance par le biais du bus)

Le circuit de logique 8 qui contrôle le signal sur la sortie LO1 reçoit, outre la sortie de la broche D0, le signal d'alarme du circuit de surveillance 6 et la sortie de l'organe de commande locale 7.

Un circuit de logique 9 reçoit, outre le signal Li de l'organe de commande locale 7, les signaux des entrées S et A. Le bit D3 prend un état correspondant à la disponibilité de l'appareil de protection.

Dans le module des figures 3 et 4, le contact auxiliaire a₄ de l'appareil de protection D est connecté à l'entrée A du module (broche D3). Le contact auxiliaire a₅ du module magnéto-thermique F1-F2 est connecté à l'entrée T du module. Le contact auxiliaire a₁ du contacteur KM₁ (détection de marche avant) et le contact auxiliaire a₂ du contacteur KM2 (détection de marche arrière) sont connectés aux entrées LI1 et LI2 respectivement.

Les sorties LO1 (commande de marche avant) et LO2 (commande de marche arrière) sont connectées aux bobines des contacteurs KM1 et KM2 respectivement. Les deux broches D₀ et D₁ sont des broches de données bidirectionnelles.

L'organe de commande locale 7 peut prendre une position "Arrêt" ou "OFF", une position "Marche" ou "ON" et une position "Li" (commande à distance) et est associé à un second organe de commande pouvant prendre une position "marche avant" ou "AV", une position "arrêt" ou "OFF" et une position "marche arrière" ou "AR".

Le circuit 10 qui reçoit les signaux des entrées LI1 et LI2 affecte le bit D1 soit en état "marche' ou en état "arrêt" et affecte le bit D0 soit en état "marche avant" soit en état "marche arrière". Le bit D1 contrôle la "marche" ou "l'arrêt" et le bit D0 contrôle soit la "marche avant" soit la "marche arrière". Le circuit 15 gère l'échange bidirectionnel de données sur les broches D0 et D1.

Le circuit de commutation 8, en fonction de l'état du bit D1 et de l'état du bit D0, active soit la sortie LO1(marche avant) soit la sortie LO2 (marche arrière) ou selon l'état du bit D1 commande la marche/arrêt. Ce circuit 8 reçoit le signal de sortie du circuit de surveillance 6 de manière à mettre les sorties LO1 et LO2 en "arrêt" si le signal d'alarme est émis par le circuit de surveillance 6. Un circuit 14 gère la commutation "avant"-"arrière", sans arrêt.

Le circuit de logique 9 reçoit, outre le signal Li de l'organe de commande locale 7, les signaux des entrées S et A. Le bit D3 prend un état correspondant à la disponibilité de l'appareil de protection.

Dans le module des figures 5 et 6, le contact auxiliaire a₄ de l'appareil de protection D est connecté à l'entrée A du module (broche D3). Le contact auxiliaire a₅ de l'appareil de protection D est connecté à l'entrée T du module. Le contact auxiliaire a₂ associé au contacteur KM2 (marche/arrêt) est connecté à l'entrée LI2, tandis que le contact auxiliaire a₁ du contacteur KM1 (démarrage en étoile) est connecté à l'entrée LI1 et que le contact auxiliaire a₃ du contacteur KM3 (démarrage en triangle) est connecté à l'entrée LI3.

La sortie LO2 est reliée à la bobine du contacteur KM2 commandant la marche-arrêt tandis que la sortie LO1 est reliée à la bobine du contacteur KM1 (démarrage en étoile) et que la sortie LO3 est reliée à la bobine du contacteur KM3 (démarrage en triangle).

L'organe de commande 7 peut prendre une position "Arrêt" ou "OFF", une position "Marche" ou "ON" et une position "Li" (commande à distance par le bus).

Le circuit de commutation 8 qui contrôle les signaux de sortie sur les sorties L01, L02, LO3 reçoit le signal d'alarme du circuit de surveillance 6, la sortie de l'organe de commande locale 7 et la sortie de la broche D0. Il reçoit également une information de temporisation nécessaire aux commutations du démarreur étoile/triangle.

Le circuit 9 reçoit, outre le signal Li de l'organe de commande locale 7, les signaux des entrées S et A. La sortie de ce circuit 9 est envoyée sur la broche D3. Le bit D3 prend un état correspondant à la "disponibilité" signifiant que l'installation est en ordre de marche.

Le circuit 12 de surveillance de séquence reçoit les signaux d'entrée des entrées LI1, LI2, LI3 et fournit en sortie un signal de validation à une porte ET 13 recevant le signal de l'entrée T, cette porte étant connectée à la broche de donnée D2. Toute la séquence de démarrage étoile-triangle est suivie et lorsqu'elle s'est bien passée le circuit 12 envoie le signal de validation.

## Revendications

1. Module d'interface entre un bus de terrain (B) et un appareillage électrique (C) de commande et protection d'un moteur électrique (M), ce module comportant un circuit intégré (21) pourvu de broches de données (D0, D1, D2, D3) reliées via des circuits d'entrée/sortie (3) à des contacts ou capteurs TOR (a₁, a₂, a₃, a₄, a₅, a₆) ou à des bobines ou actionneurs (KM1, KM2, KM3) de l'appareillage électrique (C), caractérisé par le fait que les broches de données (D0, D1, D2, D3) du circuit intégré (21) sont connectées, via des circuits logiques, à des entrées ou sorties (A, T, LI1, LI2, LO1, LO2, S) dont le nombre est supérieur à celui du nombre de broches de données (D0, D1, D2, D3), ces entrées/sorties étant connectées aux bobines ou actionneurs (KM1, KM2, KM3) et aux contacts auxiliaires ou capteurs TOR (a₁, a₂, a ₃, a₄, a₅, a₆) de l'appareillage électrique (C).

2. Module selon la revendication 1 ou 2, caractérisé par le fait que chaque broche d'entrée/sortie des données (D0, D1, D2, D3) couvre une commande ou un état standardisé pour tous les types de départs moteurs.

3. Module selon la revendication 4, caractérisé par le fait qu'une première broche de données (D0) correspond à un bit dont l'état définit la marche ou l'arrêt, que la seconde broche de données (D1) correspond à un bit dont l'état définit l'ouverture ou la fermeture, que la troisième broche de données (D2) correspond à un bit dont l'état définit un défaut ou un non-défaut, que la quatrième broche de données (D3) correspond à un bit dont l'état définit l'état de marche.

4. Module selon l'une quelconque des revendications précédentes, caractérisé par le fait qu'il comporte un circuit logique de surveillance (6) détectant l'absence de dialogue entre le module (I) et le bus (B) et agissant sur un circuit de logique (8) contrôlant la ou les sorties de fonctionnement en marche/arrêt.

5. Module d'interface selon l'une quelconque des revendications 1 à 4, caractérisé par le fait que la première broche et la seconde broche de données (D0, D1) du circuit intégré (21) sont bidirectionnelles et sont connectées, via un circuit logique (8), à deux sorties (LO1, LO2) destinées à être connectés à des bobines ou actionneurs (KM1,KM2) de l'appareillage électrique (C) qui est du type à inversion et sont connectées, via un circuit logique (10), à deux entrées (LI1, LI2) destinées à être connectées à des contacts ou capteurs TOR (a₁, a₂) associés auxdits actionneurs ou bobines.

6. Module d'interface selon l'une quelconque des revendications 1 à 4, caractérisé par le fait que le circuit intégré (21) est relié, par une première broche de données (D0) et via un circuit logique (8), à trois sorties (LO1, LO2, LO3) destinées à être connectés à des bobines ou actionneurs (KM1, KM2, KM3) de l'appareillage électrique (C) qui est du type à démarrage étoile-triangle.

7. Module d'interface selon la revendication 6, caractérisé par le fait qu'il comporte un circuit de surveillance du séquencement (12) dont la sortie est reliée à une troisième broche de données (D2) du circuit intégré et recevant les signaux des trois entrées (LI1, LI2, LI3) connectées aux contacts auxiliaires de l'appareillage (C).

8. Module d'interface selon l'une quelconque des revendications précédentes, caractérisé par le fait qu'il comporte un circuit de logique (9) relié en sortie à une quatrième broche de données (D3) du circuit intégré (21) et recevant les signaux d'entrées (A, S) et de la sortie d'un organe de commande locale (7).

## Patentansprüche

1. Schnittstellenmodul zwischen einem Feldbus (B) und einem elektrischen Steuer- und Schutzgerät (C) eines Elektromotors (M), wobei dieses Modul einen integrierten Schaltkreis (21) mit Datenklemmen (D0, D1, D2, D3) aufweist, die über Eingangs-/Ausgangskreise (3) an Kontakte oder TOR-Sensoren (a₁, a₂, a₃, a₄, a₅, a₆) oder an Spulen oder Schalter (KM1, KM2, KM3) des elektrischen Geräts (C) angeschlossen sind, dadurch gekennzeichnet, dass die Datenklemmen (D0, D1, D2, D3) des integrierten Schaltkreises (21) über logische Schaltkreise mit Eingängen oder Ausgängen (A, T, LI1, LI2, LO1, LO2, S) verbunden sind, deren Anzahl grösser ist als diejenige der Anzahl der Datenklemmen (D0, D1, D2, D3), wobei diese Eingänge/Ausgänge an den Spulen oder Schaltern (KM1, KM2, KM3) und an die Hilfskontakte oder TOR-Sensoren (a₁, a₂, a₃, a₄, a₅, a₆) des Elektrogeräts (C) angeschlossen sind.

2. Modul nach Anspruch 1 oder 2, dadurch gekennzeichnet, dass jede Dateneingangs-/Ausgangsklemme (D0, D1, D2, D3) eine Steuerung oder einen standardisierten Zustand für jeden beliebigen Motorabgangstyp deckt.

3. Modul nach Anspruch 4, dadurch gekennzeichnet, dass eine erste Datenklemme (D0) einem Bit entspricht, dessen Zustand die Ein- oder Ausschaltung definiert, dass die zweite Datenklemme (D1) einem Bit entspricht, dessen Zustand das Öffnen oder Schliessen definiert, dass die dritte Datenklemme (D2) einem Bit entspricht, dessen Zustand eine Störung oder eine Nicht-Störung definiert, dass die vierte Datenklemme (D3) einem Bit entspricht, dessen Zustand den Betriebszustand definiert.

4. Modul nach einem der vorstehend genannten Ansprüche, dadurch gekennzeichnet, dass es einen logischen Überwachungsschaltkreis (6) umfasst, der das Fehlen eines Dialogs zwischen dem Modul (I) und dem Bus (B) detektiert und auf einen logischen Schaltkreis (8) wirkt, der den oder die Betriebsausgänge Ein/Aus kontrolliert.

5. Schnittstellenmodul nach einem der Ansprüche 1 bis 4, dadurch gekennzeichnet, dass die erste und die zweite Datenklemme (D0, D1) des integrierten Schaltkreises (21) Zweirichtungsklemmen und über einen logischen Schaltkreis (8) an zwei Ausgängen (LO1, LO2) angeschlossen sind, die an Spulen oder Schalter (KM1, KM2) des Elektrogeräts (C) angeschlossen werden sollen, das vom Typ mit Umkehrung ist, und dass sie über einen logischen Schaltkreis (10) an zwei Eingängen (LI1, LI2) angeschlossen sind, die an Kontakte oder TOR-Sensoren (a₁, a₂) angeschlossen werden sollen, die den besagten Schaltern oder Spulen zugeordnet sind.

6. Schnittstellenmodul nach einem der Ansprüche 1 bis 4, dadurch gekennzeichnet, dass der integrierte Schaltkreis (21) mit einer ersten Datenklemme (D0) und über einen logischen Schaltkreis (8) mit drei Ausgängen (LO1, LO2, LO3) verbunden ist, die an Spulen oder Schalter (KM1, KM2, KM3) des Elektrogeräts (C) angeschlossen werden sollen, das vom Typ mit Stern-Dreieck-Start ist.

7. Schnittstellenmodul nach Anspruch 6, dadurch gekennzeichnet, dass es einen Sequenzüberwachungskreis (12) umfasst, dessen Ausgang an eine dritte Datenklemme (D2) des integrierten Schaltkreises angeschlossen ist und die Signale von drei an den Hilfskontakten des Geräts (C) angeschlossenen Eingängen (LI1, LI2, LI3) erhält.

8. Schnittstellenmodul nach einem der vorstehend genannten Ansprüche, dadurch gekennzeichnet, dass es einen logischen Schaltkreis (9) umfasst, dessen Ausgang an eine vierte Datenklemme (D3) des integrierten Schaltkreises (21) angeschlossen ist und die Signale der Eingänge (A, S) und des Ausgangs eines lokalen Steuerorgans (7) erhält.

## Claims

1. Interface module between a field bus (B) and electrical equipment (C) controlling and protecting an electric motor (M), said module including an integrated circuit (21) having data pins (D0, D1, D2, D3) connected via input/output circuits (3) to contacts or binary sensors (a₁, a₂, a₃, a₄, a₅, a₆) or to coils or actuators (KM1, KM2, KM3) of the electrical equipment (C), characterised in that the data pins (D0, D1, D2, D3) of the integrated circuit (21) are connected via logic circuits to inputs or outputs (A, T, LI1, LI2, LO1, LO2, S) greater in number than the data pins (D0, D1, D2, D3), said inputs/outputs being connected to coils or actuators (KM1, KM2, KM3) and to auxiliary contacts or binary sensors (a₁, a₂, a₃, a₄, a₅, a₆) of the electrical equipment (C).

2. Module according to claim 1 or claim 2 characterised in that each data input/output pin (D0, D1, D2, D3) constitutes a standard control or status pin for all types of motor starter.

3. Module according to claim 4 characterised in that a first data pin (D0) corresponds to an on/off bit, the second data pin (D1) corresponds to an open/closed bit, the third data pin (D2) corresponds to a fault/no fault bit and the fourth data pin (D3) corresponds to an on bit.

4. Module according to any one of the preceding claims characterised in that it includes a monitor logic circuit (6) detecting the absence of dialogue between the module (I) and the bus (B) and operating on a logic circuit (8) controlling on/off outputs.

5. Interface module according to any one of claims 1 to 4 characterised in that the first data pin and the second data pin (D0, D1) of the integrated circuit (21) are bidirectional and are connected via a logic circuit (8) to two outputs (LO1, LO2) intended to be connected to coils or actuators (KM1, KM2) of the electrical equipment (C) which is of the reversing starter type and are connected via a logic circuit (10) to two inputs (LI1, LI2) intended to be connected to contacts or binary sensors (a₁, a₂) associated with said actuators or coils.

6. Interface module according to any one of claims 1 to 4 characterised in that the integrated circuit (21) is connected via a first data pin (D0) and via a logic circuit (8) to three outputs (LO1, LO2, LO3) intended to be connected to coils or actuators (KM1, KM2, KM3) of the electrical equipment (C) which is of the star-delta starter type.

7. Interface module according to claim 6 characterised in that it includes a sequence monitor circuit (12) the output of which is connected to a third data pin (D2) of the integrated circuit and receives signals from three inputs (LI1, LI2, LI3) connected to the auxiliary contacts of the equipment (C).

8. Interface module according to any one of the preceding claims characterised in that it includes a logic circuit (9) having its output connected to a fourth data pin (D3) of the integrated circuit (21) and receiving input signals (A, S) and the output signal of a local control unit (7).
